# EUROPEAN PATENT SPECIFICATION

(11) **EP 1 593 962 B1**
(45) Date of publication and mention of the grant of the patent: **21.08.2013**
(21) Application number: 05710669.2
(22) Date of filing: 18.02.2005
(51) Int. Cl.: G01N 27/49

(54) **Eletrochemical oxygen sensor**
Elektrochemischer Sauerstoffsensor
Capteur électrochimique d'oxygéne

(30) Priority: 20.02.2004 WO PCT/JP2004/044881
(43) Date of publication of application: 09.11.2005
(73) Proprietor: GS Yuasa International Ltd., Kisshoin, Minami-ku Kyoto 601-8520 (JP)
(72) Inventor: KITAZAWA, Naohisa c/o GS Yuasa Corporation, Kyoto-shi, Kyoto 601-8520 (JP); KITAMURA, Naoya c/o GS Yuasa Corporation,, Kyoto-shi, Kyoto 601-8520 (JP); IWANAMI, Yoshiharu c/o GS Yuasa Corporation, Kyoto-Shi, Kyoto 601-8520 (JP)
(74) Representative: Grünecker, Kinkeldey, Stockmair & Schwanhäusser
(86) International application number: PCT/JP2005/003068
(87) International publication number: WO 2005/080954

(56) References cited:
- EP-A- 1 203 951
- WO-A-97/46874
- GB-A- 2 114 304
- JP-A- 5 133 930
- JP-A- 57 043 153
- JP-A- 57 119 254
- JP-A- 2004 132 915
- JP-U- 58 123 359
- US-A- 3 454 485
- US-A- 3 575 836
- US-A- 3 700 479
- US-A- 3 700 579
- US-A- 3 700 579

## Description

### Technical Field

The present invention relates to an electrochemical oxygen sensor.

### Background Art

An oxygen sensor is used for such purposes as checking for oxygen deficiency inside a ship's hold or manhole and detecting oxygen concentration in medical equipment including an anesthesia apparatus and a mechanical ventilator.

The oxygen sensor includes various types such as electrochemical, magnetic, and zirconia. Among these oxygen sensors, a galvanic cell type oxygen sensor, which is one type of electrochemical oxygen sensor, is widely utilized since it is low in price, easy to use and furthermore, operable at room temperature.

A conventional galvanic cell type oxygen sensor, as is disclosed in JP S49-053891A, Japanese examined patent application No. H02-039740 and JP 2002-350384A, inside its case, is composed of a battery consisting of a positive electrode containing a metal effective in electrochemical reduction of oxygen; a negative electrode made of lead; and an electrolyte. A resistor having a constant value of resistivity is connected between the positive electrode and the negative electrode so as to detect galvanic current flow between the positive and negative electrodes by oxygen reduction on the positive electrode and lead oxidation on the negative electrode. Since there is a linear relation between the galvanic current and the oxygen concentration, oxygen concentration is detected by utilizing this relation.

WO 97/46874 A discloses a polarographic oxygen sensor having a first electrode made from platinum, gold, silver or rhodium, and a second electrode which is made of zinc, cadmium, lead or silver. Further, the electrolyte is made of potassium chloride or lithium chloride.

GB 2 114 304 A discloses an electrochemical oxygen sensor, comprising various electrode combinations, such as lead/silver, platinum/silver, platinum/gold, platinum/aluminium, and aluminium/silver. However, this document remains silent on the pH value of the respective electrolyte. It is mentioned that suitable electrolytes include aqueous solutions of alkalines and chlorides and may contain lead acetate.

EP 1 203 951 A discloses an amperometric sensor for sensing dissolved oxygen, which has a noble metal cathode and an anode made from silver, zinc, cadmium or lead. Regarding the electrolyte, document D3 only mentions in column 4, lines 14 to 16, that the electrolyte is selected to be compatible with the cathode and anode material selected. This, however, does not give any information about a particular pH value for a person skilled in the art. Thus, it might signify any pH value between pH 0 and pH 14.

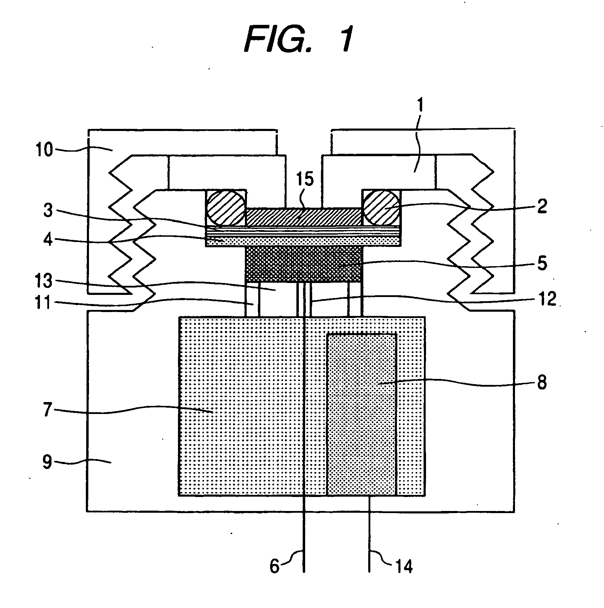

US 3,700,579 A relates to a dry electrode which only form an electrolyte after diffusion of water into the membrane. Although, in figure 1 indeed a zinc coating as the second electrode is shown, no information about the pH value being present inside the cell is given. The pH value of the outer solution is mentioned in this document, but this outer pH value does not have anything to do with the pH value of the inner electrolyte according to the present application.

US 3,454,485 A relates to an electrochemical oxygen sensor which has a scavenger means for removing oxygen dissolved in the electrolyte from external surroundings before performing the actual measurement. The cell according to this document has a galvanic type cell and has a cathode formed of noble metal, and an anode which can be formed of zinc, cadmium, lead, or another base material which has an electromotive potential relative to hydrogen of the proper magnitude. The electrode may be a potassium hydroxide solution.

### Disclosure of the Invention

The conventional galvanic cell type oxygen sensor uses lead for its negative electrode. Lead is harmful to environment, however. Therefore, demand has increased for a galvanic cell type oxygen sensor which does not use lead for its negative electrode.

A potentiometric type oxygen sensor, which is another type of electrochemical sensor other than the galvanic cell type, uses silver or silver chloride for its negative electrode. Therefore, demand that lead not be used is satisfied. However, this type oxygen sensor is problematic on the cost front for general diffusion since both silver and silver chloride are expensive.

Furthermore, the inventors of the present invention, who produced an electrochemical oxygen sensor using a metal other than lead and silver for its negative electrode, found the following problems: (i) the limiting current region (diffusion-limited region) of oxygen gas is very narrow in the electrochemical sensor; and (ii) the metal used for the negative electrode dissolves by immersion in electrolyte thereby generating hydrogen causing leakage. Specifically, there is a problem in that the electrochemical oxygen sensor produced by using a metal other than lead and silver for its negative electrode does not function properly.

Accordingly, it is an object of the present invention to provide an electrochemical oxygen sensor wherein it is more harmless to environment; a low cost material is used for its negative electrode; and oxygen concentration can be measured accurately.

In the following, the electrochemical oxygen senser of the present invention will be described.

A method of using electrochemical oxygen sensor of the present invention is characterized by the features of claim 1.

Here, the "oxygen permeable membrane" means a barrier membrane selectively permeable to oxygen, for limiting the amount of permeation so as to cause a limiting current region accompanied by the rate-determining of oxygen gas supply in a wide voltage range as its cell characteristics. Also, the measuring object of the electrochemical oxygen sensor is a gas or a dissolved gas in liquid. The electrochemical oxygen sensor can measure oxygen concentration by detecting the electric current flowing between the positive and negative electrodes in proportion to the oxygen concentration in the measuring object.

In the electrochemical oxygen sensor of the present invention, the pH of the electrolyte is controlled with using zinc as the negative electrode metal, thereby preventing the metal from dissolving. Also, since lead is not used, it is more harmless to environment. In addition, since neither silver nor silver chloride is used, its cost is low. Furthermore, it is found that oxygen concentration can be detected accurately even though the concentration is any of 0 to 100%. Details of this will be described later.

It is to be noted that although the pH of the electrolyte used in the electrochemical oxygen sensor of the present invention which employs zinc for its negative electrode is preferably 7 to 12 as mentioned above, the pH thereof is more prefe rably 9 to 12.

The pH of the electrolyte is thus controlled with employing aluminum or zinc as the negative electrode metal, thereby preventing the metal from dissolving. Also, since lead is not used, it is more harmless to environment. In addition, since neither silver nor silver chloride is used, its cost is low. Furthermore, it is found that oxygen concentration can be detected accurately even though the concentration is any of 0 to 100%. Details of this will be described later.

It is to be noted that although the pH of the electrolyte used in the electrochemical oxygen sensor of the present invention which uses aluminum for its negative electrode is preferably 3 to 9 as mentioned above, the pH thereof is more preferably 3 to 5.

The electrochemical oxygen sensor of the present invention is characterized by further comprising comprising a sensor operating circuit.

The electrochemical oxygen sensor of the present invention is characterized in that, when zinc is used for its negative electrode, the potential of the positive electrode is within the range of +0.1V to +0.4V relative to the potential of the negative electrode. Similarly, the electrochemical oxygen sensor of the present invention is characterized in that, when aluminum is used for its negative electrode, the potential of the positive electrode is within the range of +1.0V to +1.4V relative to the potential of the negative electrode.

In this configuration, when the voltage between the positive and negative electrodes is maintained to be within the said voltage range by the sensor operating circuit, the accuracy of the sensor can be maintained precisely within the oxygen concentration range of 0 to 100% as the potentiometric type oxygen sensor. It is to be noted that the electrochemical oxygen sensor of the present invention can operate also as a galvanic cell type oxygen sensor if a resistance element such as a thermistor having a proper value of resistivity is connected so that the voltage between the positive and negative electrodes will be within the said voltage range.

The method using the electrochemical oxygen sensor of the present invention is the method of using an oxygen sensor which comprises a positive electrode, a negative electrode, electrolyte and a cell part having an oxygen permeable membrane, wherein the positive electrode contains a metal effective in electrochemical reduction of oxygen; the negative electrode contains zinc; and an aqueous solution of pH 7 to 12 is used as the electrolyte.

Alternatively, the method using the electrochemical oxygen sensor of the present invention is the method of using an oxygen sensor which comprises a positive electrode, a negative electrode, electrolyte and a cell part having an oxygen permeable membrane, wherein the positive electrode contains a metal effective in electrochemical reduction of oxygen; the negative electrode contains aluminum; and an aqueous solution of pH 3 to 9 is employed for the electrolyte.

These methods, even when using the electrochemical oxygen sensor, can make the environmental harmfulness lighter and make the operating cost lower.

The configuration of the cell part of the electrochemical oxygen sensor of the present invention is shown in Fig. 1. Next, the operation principle of the electrochemical oxygen sensor of the present invention which employs Zn for its negative electrode and an aqueous solution of pH 7 to 12 for its electrolyte is described with reference to Fig. 1.

Oxygen in a measuring objective gas which has passed through a porous protecting membrane passes through an oxygen permeable membrane 3. It is thought that the oxygen which has passed through the oxygen permeable membrane 3 is reduced in a positive electrode 4, causing the following electrochemical reaction through electrolyte 7 in a perforation 11 for supplying electrolyte, between the positive electrode 4 and a negative electrode 8.

Positive electrode reaction:

O₂+2H₂O+4e⁻ → 4OH⁻ (1)

Negative electrode reaction:
When the pH of the electrolyte is in the range from 7 to 9.3

2Zn → 2Zn²⁺+4e⁻ (2)

2Zn²⁺+4OH⁻→ 2Zn(OH)₂ (3)

2Zn(OH)₂ → 2ZnO+2H₂O (4)

When the pH of the electrolyte is in the range from 9.3 to 12

2Zn+6OH⁻→ 2HZnO₂⁻+2H₂O+4e⁻ (5)

2HZnO₂⁻→ 2ZnO+2OH⁻. (6)

Total reaction of the negative electrode

2Zn+4OH⁻ → 2ZnO+2H₂O+4e⁻ (7)

Total reaction:

O₂+2Zn = 2ZnO (8)

Only the reduction of Equation (1) can proceed by maintaining the potential of the positive electrode 4 relative to the negative electrode 8 to be a value which is convenient for oxygen reduction and furthermore, which does not cause another reduction. On the other hand, the electrode reaction of the negative electrode 8 depends on the pH of the electrolyte. When the pH of the electrolyte is in the range from 7 to 9.3, Oxidation (2) and Chemical reactions (3) and (4) occur. Also, when the pH of the electrolyte is in the range from 9.3 to 12, Oxidation (5) and Chemical reaction (6) occur. In both cases, therefore, Reaction (7) proceeds as the total reaction of the negative electrode. It follows that Reaction (8) proceeds as the total reaction.

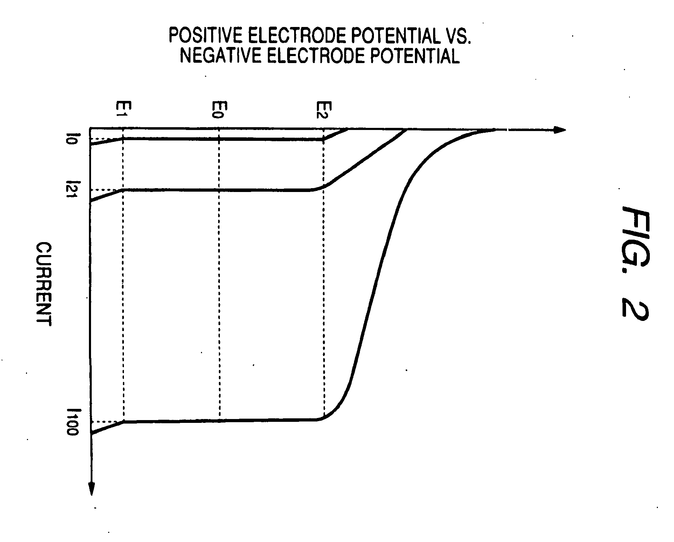

Fig. 2 shows the relation between potential and current of the electrochemical oxygen sensor of the present invention in schematic form. In Fig. 2, the horizontal axis shows the electric current flowing between the positive and negative electrodes, and the vertical axis shows the positive electrode potential relative to the negative electrode potential (hereinafter simply called the "voltage"). In Fig. 2, value I₀ denotes the limiting current value in 0% oxygen gas, similarly, I₂₁ denotes the limiting current value in 21% oxygen gas and I₁₀₀ the limiting current value in 100% oxygen gas. In a region whose voltage is lower than E₁ and a region whose voltage is higher than E₂. current changes significantly according to voltage. In contrast, when a voltage is in the range between E₁ and E₂, since a current value is in proportion to the amount of the oxygen which passes through the oxygen permeable membrane to reach the positive electrode, that is, oxygen concentration. Accordingly, when a voltage is set to E₀. an arbitrary value between E₁ and E₂, current values I₀, I₂₁ and I₁₀₀ are obtained in proportion to the oxygen concentration at the time.

It is to be noted that since the values of E₁ and E₂ change depending on measurement conditions such as a material of the positive electrode and the negative electrode, type of the electrolyte, and temperature, the Eovalue suitable for these conditions has to be selected.

For the positive electrode of the electrochemical oxygen sensor of the present invention, a metal effective in electrochemical reduction of oxygen is used. Specifically, a catalytic electrode of gold, silver, platinum or the like is used.

For the negative electrode, since a metal in which stable oxidation proceeds whatever oxygen concentration may be in a measuring gas has to be employed, zinc (Zn) and aluminum (A1) are suitable as such a metal. Therefore, for the negative electrode, Zn or Al can be employed.

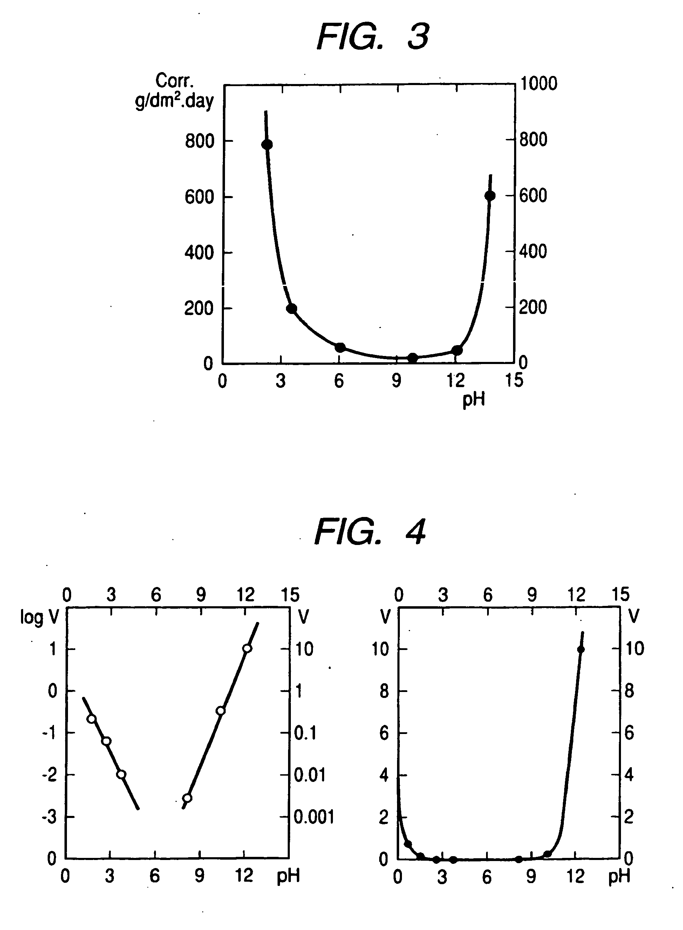

The electrolyte has to be selected according to the type of the electrode employed for the negative electrode or negative electrode reaction. According to Atlas of Electrochemical Equilibria or Aqueous Solutions Marcel Pourbaix National Association of Corrosion Engineers (Second English Edition, 1440 South Creek Drive, Houston, Texas 77084 (1974)), the pH effect on Zn corrosion is as shown in Fig. 3. As is seen from Fig. 3, when the pH is in the range from 7 to 12, the corrosion of Zn is suppressed. Therefore, when employing Zn for the negative electrode, the pH of the electrolyte has to be adjusted within the range from 7 to 12.

Similarly, according to the above literature, the pH effect on Al corrosion is as shown in Fig. 4. Therefore, when employing Al for the negative electrode, the pH of the electrolyte has to be adjusted within the range from 3 to 9. It is to be noted that the value V denotes corrosion rate in Fig. 4, expressed in the unit mg/dm²·h.

For the material of the oxygen permeable membrane, a material which selectively passes oxygen through, and which can limit the amount of permeation so as to cause a limiting current region accompanied by the rate-determining of oxygen gas supply in a wide voltage range as its cell characteristics. For example, a tetrafluoroethylene resin membrane or a tetrafluoroethylene-hexafluoropropylene copolymer membrane can be used.

When a suitable thermistor or resistor is connected between a positive electrode lead wire 6 and a negative electrode lead wire 14 so as to convert current into a voltage signal, an output voltage as the galvanic cell type sensor can be obtained.

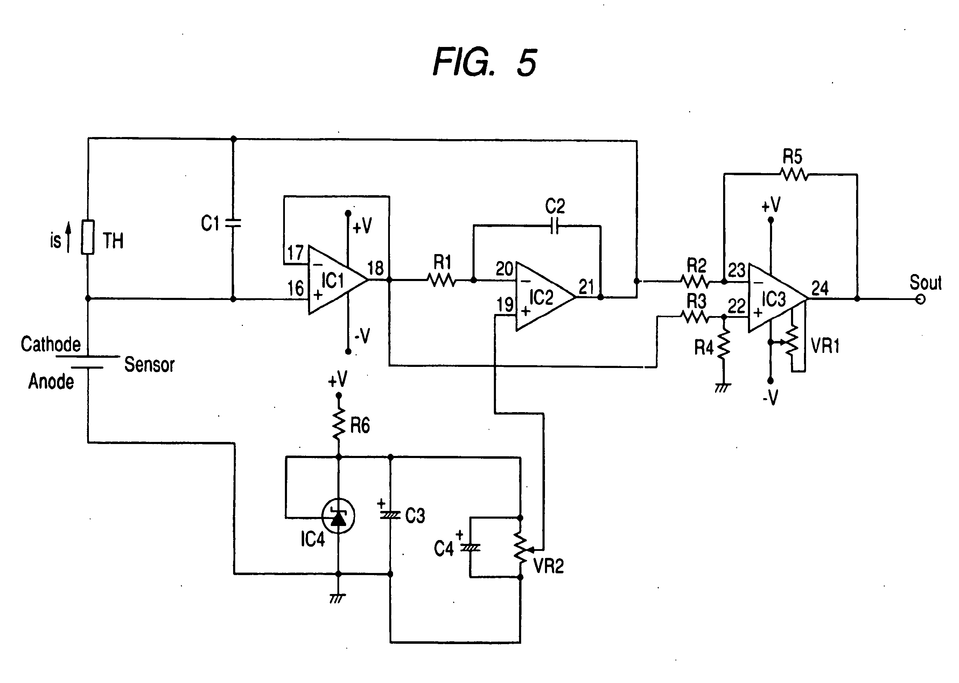

On the other hand, in order to maintain the positive electrode potential relative to the negative electrode potential to be a constant value, it is only necessary to connect, for example, the circuit shown in Fig. 5 between the positive electrode and the negative electrode. That is, Fig. 5 shows an exemplary sensor operating circuit at a time when the electrochemical oxygen sensor of the present invention is used as the constant potential type.

In Fig. 5, each of reference character IC 1, IC 2 and IC 3 denotes an operational amplifier, IC 4 a shunt regulator, R1 a resistor for stability, each of R2, R4, R5 and R6 a resistor, R3 a resistor for setting voltage gain, each of VR1 and VR2 a variable resistor, each of C1, C2, C3 and C4 a capacitor for voltage stability, TH a thermistor for temperature correction, 16 a non-inverting terminal of the operational amplifier IC 1, 17 an inverting terminal of the operational amplifier IC 1, 18 an output terminal of the operational amplifier IC 1, 19 a non-inverting terminal of the operational amplifier IC 2, 20 an inverting terminal of the operational amplifier IC 2, 21 an output terminal of the operational amplifier IC 2, 22 a non-inverting terminal of the operational amplifier IC 3, 23 an inverting terminal of the operational amplifier IC 3, and 24 an output terminal of the operational amplifier IC 3.

The positive electrode of the oxygen sensor is connected to the non-inverting terminal 16 of the operational amplifier IC 1, and the negative electrode thereof is connected to the reference earth of the circuit. The inverting terminal 17 of the operational amplifier IC I is connected through the resistor R1 for stability to the inverting terminal 20 of the operational amplifier IC 2, the resistor R3 for setting voltage gain and the output terminal 18 of the operational amplifier IC 1.

Reference character IC 4 denotes the shunt regulator for generating a constant potential, and the potential set by the resistor R6, the variable resistor VR2, and the capacitors C3 and C4 for voltage stability is applied to the non-inverting terminal 19 of the operational amplifier IC 2. Based on the operation principle of the operational amplifier, since the non-inverting terminal and the inverting terminal are necessarily equal to each other and the input impedances of the non-inverting terminal and the inverting terminal are almost infinitely large, current does not flow in/out.

Therefore, the non-inverting terminal 19 and the inverting terminal 20 of the operational amplifier 1C 2, and the non-inverting terminal 16 and the inverting terminal 17 of the operational amplifier IC 1 are respectively equal to each other in potential, and the inverting terminal 17 of the operational amplifier IC 1 and the inverting terminal 20 of the operational amplifier 1C 2 are connected so that current does not flow through the resistor R1 for stability. Therefore, the potential of each of the terminals 16, 17, 18, 19 and 20 becomes equal to the potential set by the shunt regulator IC 4, and the potential of the positive electrode of the sensor connected to the non-inverting terminal 16 of the operational amplifier IC 1 is set to be constant.

Also, since current does not flow through the non-invarting terminal 16 of the operational amplifier IC 1, the entire sensor current generated by oxygen reduction flows into the output from the operational amplifier IC 2 through the thermistor for temperature correction TH.

On the other hand, the voltage generated at both ends of the thermistor for temperature correction TH by the sensor current is input into the operational amplifier IC 3, amplified according to the amplification degree set by the resistors R2, R3, R4, R5 and the variable resistor VR1, and output to the output terminal 24 of the operational amplifier IC 3.

By the above electric circuit operation, the positive electrode potential of the oxygen sensor is maintained to be a constant value relative to the negative electrode potential, and at the same time, the voltage proportional to the sensor current is output.

### Brief Description of the Drawings

Fig. 1 is a figure showing a cross section structure of a cell part of an electrochemical oxygen sensor of the present invention;
Fig. 2 is a schematic diagram showing the relation between potential and current of the electrochemical oxygen sensor of the present invention;
Fig. 3 is a figure showing zinc corrosion velocity in the pH of a solution;
Fig. 4 is a figure showing aluminum corrosion velocity in the pH of a solution;
Fig. 5 shows a circuit for maintaining a positive electrode potential relative to a negative electrode potential to be constant;
Fig. 6 is a figure showing IV curves in the electrochemical oxygen sensor of the present invention;
Fig. 7 is a figure showing the relation between oxygen gas concentration and sensor current of the electrochemical oxygen sensor of the present invention;
Fig. 8 shows a measured result of the IV curve of Comparative Example 1;
Fig. 9 shows a measured result of the IV curve of Comparative Example 2; and
Fig. 10 shows a measured result of the IV curve of Comparative Example 3.

It is to be noted that, in each figure, reference character I denotes an inner lid, 2 an O-ring, 3 an oxygen permeable membrane, 4 a positive electrode, 5 a positive current collector, 7 electrolyte, 8 a negative electrode, 9 a holder body, 10 a holder lid, 11 a perforation for electrolyte supply, 12 a perforation for positive electrode lead wire, 13 a positive current collector holding part, 14 a negative electrode lead wire, 15 a protecting membrane, 16 a non-inverting terminal of an operational amplifier IC 1, 17 an inverting terminal of the operational amplifier 1C 1, 18 an output terminal of the operational amplifier IC 1, 19 a non-inverting terminal of an operational amplifier IC 2, 20 an inverting terminal of the operational amplifier IC 2, 21 an output terminal of the operational amplifier IC 2, 22 a non-inverting terminal of an operational amplifier IC 3, 23 an inverting terminal of the operational amplifier IC 3, 24 an output terminal of the operational amplifier IC 3, IC I the operational amplifier, IC 4 a shunt regulator, R1 a resistor for stability, R3 a resistor for setting voltage gain, VR1 a variable resistor, C3 a capacitor for voltage stability, and TH a thermistor for temperature correction.

### Preferred Mode for Carrying Out the Invention

### [Examples 1 -2 and Comparative Examples 1-5]

### [Example 1]

The cross section structure of the electrochemical oxygen sensor of Example 1 is the same as the structure shown in Fig1. Reference numeral 1 denotes an inner 11d made 1 is the same as the structure shown in Fig. 1 Reference numeral 1 denotes an inner 11d made of ABS resin, 2 an O-ring made of ethylene-propylene rubber, 3, an oxygen permeable membrane made of tetrafluoroethylene resin, 4 a positive electrode made into a catalyst electrode by sputtering gold onto the oxygen permeable membrane 3 made of a tetrafluoroethylene-hexafluoropropylene copolymer membrane, 5 a positive current collector made of carbon, 6 a positive electrode lead wire made of titanium, 7 electrolyte of pH 10.87 (24.3°C) obtained by adding 7.46g potassium chloride to 100 ml of 1.0 x 10⁻³ mol/l potassium hydroxide aqueous solution, 8 a negative electrode made of zinc (99.9% pure), 9 a holder body made of ABS resin, and 10 a holder lid made of ABS resin. It is to be noted that the "negative electrode made of zinc" means being made of zinc of 99% or higher purity in this application.

A screw thread and a screw groove are formed in each of the holder body 9 and the holder lid 10. Pressure is applied onto the inner lid 1, the O-ring 2, the oxygen permeable membrane 3, the positive electrode 4 and the positive current collector 5 by the screw fastening the holder body 9 and the holder lid 10 so as to maintain a good contact condition. The titanium positive electrode lead wire 6 is electrically connected to the positive electrode 4, and the titanium negative electrode lead wire 14 is electrically connected to the negative electrode 8.

The inner lid 1 functions as a pressure end plate. A protecting membrane 15 made of a porous fluororesin membrane prevents a stain on the surface of the oxygen permeable membrane 3. The oxygen permeable membrane 3 selectively passes oxygen through, and limits the amount of permeation so as to cause a limiting current region accompanied by the rate-determining of oxygen gas supply in a wide voltage range as its cell characteristics. Airtightness and liquidtightness are ensured by the O-ring 2.

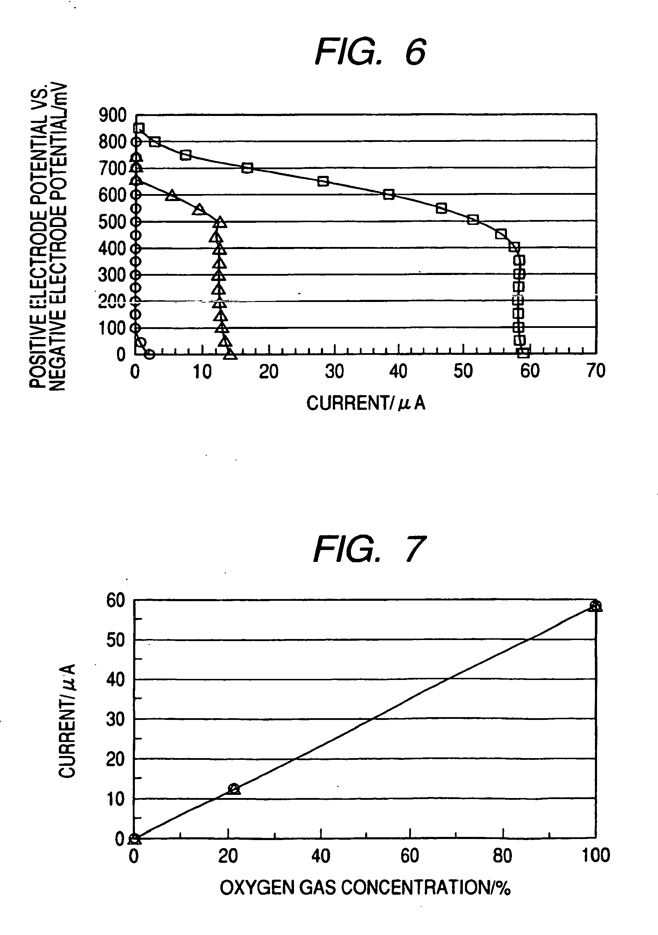

The measurement result of the IV curve at 25°C in the electrochemical oxygen sensor of Example 1 is shown in Fig. 6. In Fig. 6, reference mark o denotes the IV curve at a time when passing 0% oxygen gas through, Δ denotes the IV curve at a time when passing 21% oxygen gas through, and □ denotes the IV curve at a time when passing 100% oxygen gas through, as a measuring gas. As is seen from Fig. 6, even when the positive electrode potential changes within the range from +0.1V to +0.4V relative to the negative electrode potential, the current became almost constant and the limiting current region of oxygen gas was observed. When comparing to Fig. 2, E₁ = +0.1V E₂ = +0.4V.

A suitable thermistor or resistor is then connected between the positive electrode lead wire 6 and the negative electrode lead wire 14 so as to obtain a voltage showing the limiting current region relative to 0 to 100% oxygen gas. This allowed the electrochemical oxygen sensor to function as a galvanic cell type oxygen sensor. Also, generally, since the electrochemical oxygen sensor can function within the voltage range of the limiting current region of oxygen gas, the electrochemical oxygen sensor can function as a constant potential type oxygen sensor by fixing the positive electrode potential to a constant voltage within the range from +0.1V to +0.4V relative to the negative electrode potential.

Next, the positive electrode potential was maintained to be +0.10V, +0.20V, +0.30 and +0.40V relative to the negative electrode potential (when comparing to Fig. 2, E₀ = +0.10V, +0.20, +0.30V, +0.40V), and the sensor currents I₀, I₂₁, and I₁₀₀ was measured when passing oxygen gases of 0%, 21% and 100% in concentration through.

The measured results are organized in Table 1. It is to be noted that the numerical values in Table 1 show sensor current (unit: µA). Also, Fig. 7 shows the relation between oxygen gas concentration and sensor current when setting the positive electrode potential to +0.20V and +0.30V relative to the negative electrode potential. In Fig. 7, reference mark o denotes the relation between oxygen concentration and sensor current of +0.20V, and Δ the relation between oxygen concentration and sensor current of +0.30V.

**Table 1**

| Oxygen concentration % | Positive electrode potential relative to negative electrode potential, V | | | |
|---|---|---|---|---|
| | +0.10 | +0.20 | +0.30 | +0.40 |
| 0 | 0.34 | 0.18 | 0.15 | 0.13 |
| 21 | 12.80 | 12.46 | 12.36 | 12.41 |
| 100 | 58.47 | 58.31 | 58.67 | 57.77 |

As is seen from Table I and Fig. 7, when maintaining the positive electrode potential to be constant relative to the negative electrode potential, the relation between oxygen gas concentration and sensor current became linear in the wide oxygen concentration range from 0 to 100%. From this result, it is found that oxygen gas concentration can be measured in the wide range from 0 to 100% using the electrochemical oxygen sensor of the present invention.

### [Example 2]

The electrochemical oxygen sensor of Example 2 was produced similarly to Example 1, except that a negative electrode made of aluminum (99.99% pure) was used, and IV curve was measured under the same conditions as in Example 1. As a result, the limiting current region of oxygen gas was observed within the range of E₁ = +1.0V-E₂= +1.4V.

### [Comparative Example 1]

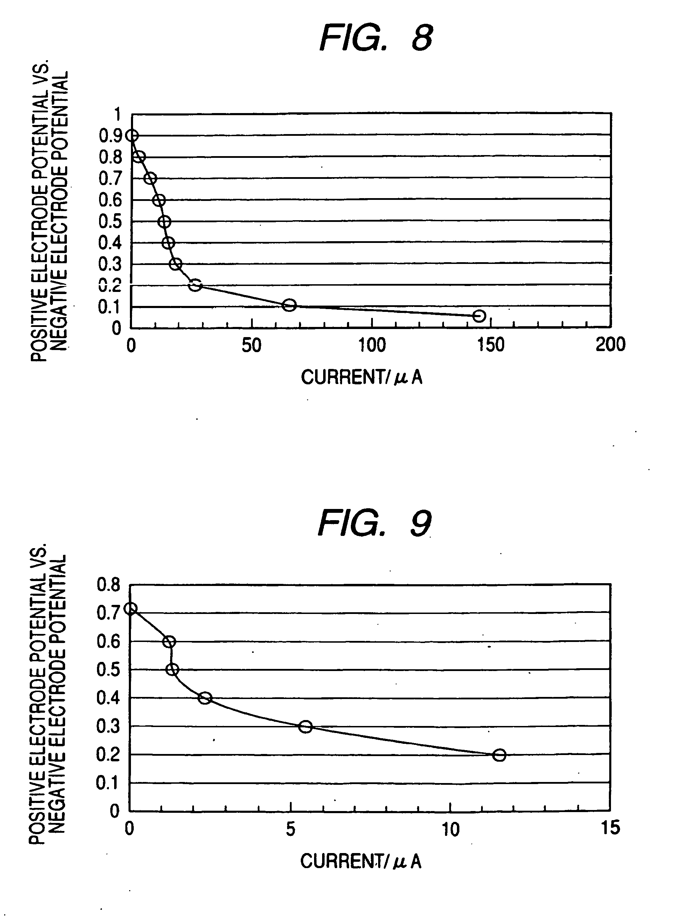

An electrochemical oxygen sensor was produced similarly to Example 1, except that pH 4.71 (26.6°C) aqueous solution obtained by adding potassium acetate to 6 mol/l acetate aqueous solution to 2 mol/l was used as electrolyte and that an O-ring made of fluorine rubber was used, and IV curve was measured in 21 % oxygen gas. The result is shown in Fig. 8. As shown in Fig. 8, the limiting current region of oxygen was extremely narrow and large current other than the reduction current of oxygen gas flowed when the applied voltage was about 0.5V or lower. Also, the sensor had leakage by the direct dissolution of the negative electrode.

### [Comparative Example 2]

An electrochemical oxygen sensor was produced similarly to Example 1, except that 45 wt.% zinc chloride aqueous solution (pH 2.74 (28.6°C)) was used as electrolyte and that an O-ring made of fluorine rubber, and IV curve was measured in 21% oxygen gas. The result is shown in Fig. 9. As shown in Fig. 9, the limiting current region of oxygen was narrow and large current other than the reduction current of oxygen gas flowed when the applied voltage became 0.5V or lower. Also, the sensor had leakage by the direct dissolution of the negative electrode, similarly to Comparative Example 1 occurring after the sensor assembly.

### [Comparative Example 3]

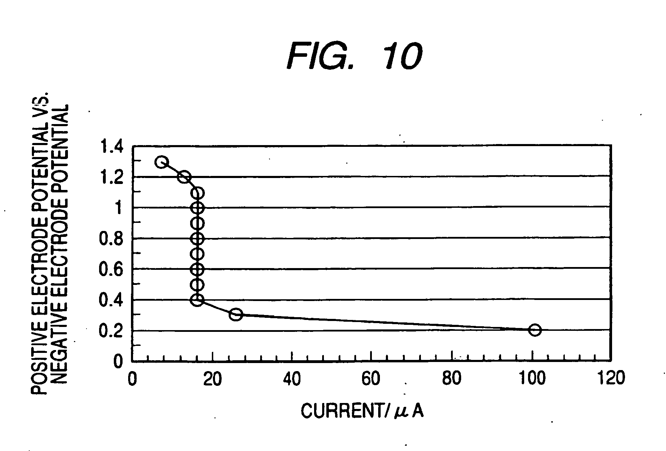

An electrochemical oxygen sensor was produced similarly to Example 1, except that 9.24 mol/l potassium hydroxide aqueous solution was used as electrolyte, and IV curve was measured in 21% oxygen gas. The result is shown in Fig. 10. As shown in Fig. 10, although the limiting current region of oxygen gas was obtained in the applied voltage range from 0.4V to 1.1V, the sensor had leakage by the direct dissolution of the negative electrode similarly to Comparative Examples 1 and 2.

### [Comparative Example 4]

An electrochemical oxygen sensor was produced similarly to Example 1, except that pH 5.0 buffer solution obtained by adding 22.6 ml of 0.1 mol/l sodium hydroxide aqueous solution to 50 ml of 0.1 mol/l potassium hydrogen phthalate aqueous solution so as to dilute to 100 ml was used as electrolyte and that an O-ring made of fluorine rubber was used, and IV curve was measured under the same conditions as in Example 1. As a result, the limiting current region of oxygen gas was not obtained and the sensor had leakage by the direct dissolution of the negative electrode.

### [Examples 3-7]

### [Example 3]

The electrochemical oxygen sensor of Example 3 was produced similarly to Example 1, except that pH 7.0 buffer solution obtained by adding 29.1 ml of 0.1 mol/l sodium hydroxide aqueous solution to 50 ml of 0.1 mol/l potassium dihydrogenphosphate aqueous solution so as to dilute to 100 ml was used as electrolyte, and IV curve was measured under the same conditions as in Example 1. As a result, the limiting current region of oxygen gas was observed within the range of E₁ = +0.2V-E₂ = +0.4V.

### [Example 4]

The electrochemical oxygen sensor of Example 4 was produced similarly to Example 1, except that pH8.0 buffer solution obtained by adding 46.1 ml of 0.1 mol/l sodium hydroxide aqueous solution to 50 ml of 0.1 mol/l potassium dihydrogenphosphate aqueous solution so as to dilute to 100 ml was used as electrolyte, and IV curve was measured under the same conditions as in Example 1. As a result, the limiting current region of oxygen gas was observed within the range of E₁ = +0.2V-E₂ = +0.4V.

### [Example 5]

The electrochemical oxygen sensor of Example 5 was produced similarly to Example 1, except that pH9.0 buffer solution obtained by adding 20.8 ml of 0.1 mol/l sodium hydroxide solution to 50 ml solution containing 0.1 mol/l boric acid and 0.1 mol/l potassium chloride so as to dilute to 100 ml was used as electrolyte, and IV curve was measured under the same conditions as in Example 1. As a result, the limiting current region of oxygen gas was observed within the range of E₁ = +0.2V -E₂ = +0.4V.

### [Example 6]

The electrochemical oxygen sensor of Example 6 was produced similarly to Example 1, except that pH11.0 buffer solution obtained by adding 4.1 ml of 0.1 mol/l sodium hydroxide aqueous solution to 50 ml of 0.05 mol/l potassium dihydrogenphosphate aqueous solution so as to dilute to 100 ml was used as electrolyte, and IV curve was measured under the same conditions as in Example 1. As a result, the limiting current region of oxygen gas was observed within the range of E₁ - +0.2V-E₂ = +0.4V.

### [Example 7]

The electrochemical oxygen sensor of Example 7 was produced similarly to Example 1, except that pH12.0 buffer solution obtained by adding 6.0 ml of 0.2 mol/l sodium hydroxide aqueous solution to 25 ml of 0.2 mol/l potassium chloride aqueous solution so as to dilute to 100 ml was used as electrolyte, and IV curve was measured under the same conditions as in Example 1. As a result, the limiting current region of oxygen gas was observed within the range of E₁=+0.2V-E₂=+0.4V.

It is found, from the results of Example 1 and Examples 3-7, that when a negative electrode made of zinc was used, even if the pH of electrolyte changes within the range from 7 to 12, the limiting current region of oxygen gas can be observed and oxygen gas concentration can be measured in the wide range from 0 to 100% using the potentiometric type oxygen sensor of the present invention.

It is to be noted that this application is based on the Japanese Patent Application No. 2004-044881 filed on February 20, 2004.

## Claims

1. A method of using an oxygen sensor for measuring an oxygen concentration, the sensor comprising:
a cell part which comprises a positive electrode (4), a negative electrode (8), electrolyte (7), and an oxygen permeable membrane (3),
wherein said positive electrode (4) contains a metal effective in electrochemical reduction of oxygen,
wherein said negative electrode (8) consists of zinc or aluminium, and
wherein said electrolyte is an aqueous solution of pH 7 to pH 12 in the case that the negative electrode consists of zinc, and that said electrolyte is an aqueous solution of pH 3 to pH 9 in the case that the negative electrode consists of aluminium;
wherein a potential of said positive electrode (4) relative to a potential of said negative electrode is in a range from +0.1V to +0.4V in the case that the negative electrode consists of zinc; and wherein a potential of said positive electrode (4) relative to a potential of said negative electrode is in a range from +1.0V to +1.4V in the case that the negative electrode consists of aluminium,
wherein the method comprises:
measuring a sensor current,
determining the oxygen concentration from a linear relation between the oxygen concentration and the sensor current.

2. The method according to claim 1, wherein said oxygen sensor further comprises a sensor operating circuit.

3. The method according to claim 1 or 2, wherein said positive electrode (4) comprises gold.

4. The method according to one of the claims 1 to 3, wherein the electrolyte (7) comprises an aqueous solution of potassium chloride and potassium hydroxide.

## Patentansprüche

1. Verfahren zum Verwenden eines Sauerstoffsensors zum Messen einer Sauerstoffkonzentration, wobei der Sensor umfasst:
einen Zellenteil, der eine positive Elektrode (4), eine negative Elektrode (8), Elektrolyt (7), und eine sauerstoffpermeable Membran (3) umfasst;
wobei die positive Elektrode (4) ein Metall enthält, das zur elektrochemischen Reduktion von Sauerstoff wirksam ist;
wobei die negative Elektrode (8) aus Zink oder Aluminium besteht, und
wobei der Elektrolyt eine wässrige Lösung mit pH 7 bis pH 12 ist, wenn die negative Elektrode aus Zink besteht, und wobei der Elektrolyt eine wässrige Lösung mit pH 3 bis pH 9 ist, wenn die negative Elektrode aus Aluminium besteht;
wobei ein Potential der positiven Elektrode (4) bezogen auf ein Potential der negativen Elektrode in einem Bereich von +0,1V bis +0,4V liegt, wenn die negative Elektrode aus Zink besteht; und wobei ein Potential der positiven Elektrode (4) bezogen auf ein Potential der negativen Elektrode in einem Bereich von +1.0V bis +1,4V liegt, wenn die negative Elektrode aus Aluminium besteht,
wobei das Verfahren umfasst:
Messen eines Sensorstromes;
Bestimmen der Sauserstoffkonzentration aus einer linearen Beziehung zwischen der Sauerstoffkonzentration und dem Sensorstrom.

2. Verfahren nach Anspruch 1, wobei der Sauerstoffsensor weiterhin eine Sensorbetriebsschaltung umfasst.

3. Verfahren nach Anspruch 1 oder 2, wobei die positive Elektrode (4) Gold aufweist.

4. Verfahren nach einem der Ansprüche 1 bis 3, wobei der Elektrolyt (7) eine wässrige Lösung von Kaliumchlorid und Kaliumhydroxid aufweist.

## Revendications

1. Procédé d'utilisation d'un capteur d'oxygène pour mesurer une concentration en oxygène, le capteur comprenant :
- une partie de cellule qui comprend une électrode positive (4), une électrode négative (8), un électrolyte (7) et une membrane perméable à l'oxygène (3),
- pour lequel ladite électrode positive (4) contient un métal effectif dans la réduction électrochimique de l'oxygène,
- pour lequel ladite électrode négative (8) est constituée de zinc ou d'aluminium, et
- pour lequel ledit électrolyte est une solution aqueuse de pH 7 à pH 12 dans le cas où l'électrode négative est constituée de zinc, et pour lequel ledit électrolyte est une solution aqueuse de pH 3 à pH 9 dans le cas où l'électrode négative est constituée d'aluminium ;
- pour lequel un potentiel de ladite électrode positive (4) relatif à un potentiel de ladite électrode négative est dans une plage de + 0,1 V à + 0,4 V dans le cas où l'électrode négative est constituée de zinc ; et pour lequel un potentiel de ladite électrode positive (4) relatif à un potentiel de ladite électrode négative est dans une plage de + 1,0 V à + 1,4 V dans le cas où l'électrode négative est constituée d'aluminium,
- pour lequel le procédé consiste à :
- mesurer un courant de capteur,
- déterminer la concentration en oxygène à partir d'une relation linéaire entre la concentration en oxygène et le courant de capteur.

2. Procédé selon la revendication 1, pour lequel ledit capteur d'oxygène comprend en outre un circuit d'exploitation de capteur.

3. Procédé selon les revendications 1 ou 2, pour lequel ladite électrode positive (4) comprend de l'or.

4. Procédé selon l'une des revendications 1 à 3, pour lequel l'électrolyte (7) comprend une solution aqueuse de chlorure de potassium et d'hydroxyde de potassium.
